# EUROPÄISCHE PATENTSCHRIFT

(11) **EP 1 393 142 B1**
(45) Veröffentlichungstag und Bekanntmachung des Hinweises auf die Patenterteilung: **16.01.2008**
(21) Anmeldenummer: 02740474.8
(22) Anmeldetag: 17.04.2002
(51) Int. Cl.: G05B 23/02

(54) **SCHALTSCHRANK-ÜBERWACHUNGSSYSTEM**
SWITCHGEAR CABINET MONITORING SYSTEM
SYSTEME DE SURVEILLANCE D'ARMOIRE DE COMMANDE

(30) Priorität: 20.04.2001 DE 10119637
(43) Veröffentlichungstag der Anmeldung: 03.03.2004
(73) Patentinhaber: Rittal GmbH & Co. KG, 35745 Herborn (DE)
(72) Erfinder: KREILING, Jörg, 35444 Biebertal (DE); LAURÖSCH, Sven, 35708 Haiger (DE)
(74) Vertreter: Fleck, Hermann-Joseph
(86) Internationale Anmeldenummer: PCT/EP2002/004234
(87) Internationale Veröffentlichungsnummer: WO 2002/086639

(56) Entgegenhaltungen:
- WO-A-97/34345
- WO-A-98/39718
- DE-A- 19 714 838
- DE-A- 19 911 249
- DE-A- 19 911 318
- DE-A- 19 911 824

## Beschreibung

Die Erfindung bezieht sich auf ein Schaltschrank-Überwachungssystem, das zum Überwachen von den Schaltschrank selbst betreffenden Funktionen einschließlich Temperaturregulierung ausgebildet ist und eine zentrale Überwachungseinheit sowie mehrere damit über eine Datenübertragungsstrecke in Datenübertragungsverbindung stehende oder bringbare, einer jeweiligen Funktion oder Funktionsgruppe gleichartiger Funktionen zugeordnete dezentrale Einheit aufweist.

Ein Schaltschrank-Überwachungssystem dieser Art ist in der WO 97/34345 angegeben. Bei diesem bekannten Schaltschrank-Überwachungssystem, das zum Überwachen von den Schaltschrank selbst betreffenden Funktionen einschließlich einer Klimatisierungseinrichtung ausgelegt ist, sind an eine zentrale Überwachungseinheit verschiedene Komponenten zum Erfassen von Signalen und Steuern von Aktoren über eine Datenübertragungsverbindung angeschlossen. Die Kompo nenten umfassen eine Eingangsschnittstelle zum Anschluss verschiedener Sensoren, wie Feuchtefühler, Türendschalter, Temperaturfühler, Vibrationssensor, Rauchsensor, Messwandler und Temperaturfühler, eine Regelungs- und Steuerungsschnittstelle für Klimatisierungskomponenten wie Wärmetauscher, Lüfter, Kühlgerät, Heizung, eine Ausgangsanschlusseinheit zum Anschluss eines Relais, Optokopplers, Bussystems, Telemetrieeinrichtung, PC-Schnittstelle Anschluss für analoge Signale und Anzeigeeinheit. Auch eine Verbindung für ein Programmier- und Testgerät und eine Leitstelle sind vorhanden. Der Anschluss der verschiedenen Komponenten ergibt einen relativ hohen Aufwand.

In der von derselben Anmelderin stammenden, nicht vorveröffentlichten deutschen Patentanmeldung Nr. 101 08 599 ist zur Verringerung des Aufwands vorgeschlagen, zur Konfigurierung und visuellen Kontrolle durch eine Bedienperson eine in dem Schaltschrank bzw. der Schaltschrankanordnung untergebrachte Serverumschalteinrichtung in der Weise auszunutzen, dass deren Anzeigesteuereinrichtung einschließlich der Anzeigeeinrichtung auch für die Überwachungseinheit ausgenutzt wird, wozu die Überwachungseinheit an die entsprechende Serverumschalteinrichtung angeschlossen ist.

In der ebenfalls nicht vorveröffentlichten deutschen Patentanmeldung Nr. 101 13 626.9 derselben Anmelderin ist eine Schaltschrank-Überwachungseinrichtung vorgeschlagen, mit der auch Vitalfunktionen eines Servers mittels der Schaltschrank-Überwachungseinrichtung überwacht werden, wobei eine Verbindung zwischen der Schaltschrank-Überwachungseinrichtung und einem dem Server ohnehin zugeordneten Überwachungsbaustein hergestellt ist.

Ein Schaltschrank-Überwachungssystem gemäß dem Oberbegriff des Anspruches 1 geht auch aus der DE 199 11 249 A1 hervor. Bei diesem bekannten Schaltschrank-Überwachungssystem sind an eine zentrale Überwachungseinheit über jeweilige Eingänge Sensoren und über jeweilige Ausgänge Aktoren anschließbar.

Bei einem in der WO 98/39718 gezeigten Überwachungssystem, insbesondere zum Überwachen von Maschinen sind lokale, mit den Maschinen verbundene Überwachungseinheiten über mindestens eine standardisierte Schnittstelle, die auch drahtlos ausgeführt sein kann, mit einem globalen Prozessor zum Austausch von Daten verbunden.

Der Erfindung liegt die Aufgabe zugrunde, ein Schaltschrank-Überwachungssystem der eingangs genannten Art bereitzustellen, mit dem die Einbau- und Nachrüstmöglichkeiten vereinfacht werden.

Diese Aufgabe wird mit den Merkmalen des Anspruchs 1 gelöst. Der Aufbau des Überwachungssystems als insbesondere in einem Gehäuse untergebrachte Haupteinheit (Mastergerät) und mindestens eine dezentrale Ein-heit, die über die drahtlose Übertragungsstrecke mit der Haupteinheit in Da-tenübertragungsverbindung gebracht ist, ergibt ohne aufwendige Kabelführungen vielfältige Anordnungsmöglichkeiten der kompakten, vorzugsweise in einem eigenen Gehäuse untergebrachten dezentralen Einheiten, die auch nach Belieben auf einfache Weise austauschbar oder nachrüstbar sind. Die Ausrüstung der Haupteinheit und der dezentralen Einheiten mit der standardisierten Schnittstelle bzw. den standardisierten weiteren Schnittstellen ist zum Beispiel mittels entsprechender Bausteine leicht möglich. Beispielsweise eignet sich eine derzeit als Blue-Tooth bekannte Schnittstelle zum Aufbau der standardisierten Übertragungsstrecke. Die Haupteinheit und die dezentralen Einheiten können sich dabei in dem selben Schaltschrank, beispielsweise auch in aneinandergereihten Schaltschränken, oder in einer Anordnung von von einander getrennten Schaltschränken befinden, die sich innerhalb des Bereichs der Datenübertragungsstrecke beispielsweise innerhalb eines Gebäudekomplexes, Gebäudes oder eines Raums befinden.

Ist die Ausbildung derart, dass mehrere dezentrale Einheiten mit jeweiligen gleichen weiteren Schnittstellen vorgesehen sind und dass die Datenübertragung von und zu der Haupteinheit über deren Schnittstelle für die drahtlose Datenübertragung erfolgt, so können über nur eine Schnittstelle der Haupteinheit mit dieser die unterschiedlichen dezentralen Einheiten Daten austauschen.

Verschiedene Ausführungsmöglichkeiten bestehen darin, dass die drahtlose Übertragungsstrecke als eine Funkstrecke, eine Infrarotstrecke oder eine Ultraschallstrecke ausgebildet ist.

Eine Ausführung des Überwachungssystems besteht beispielsweise darin, dass die dezentralen Einheiten eine Sensoranschlusseinheit, eine Türkontrolleinheit, eine Klimatisierungseinheit, eine Bedienungseinheit, eine Energieversorgungseinheit oder eine Adaptereinheit oder eine Kombination aus zumindest zweien dieser Einheiten umfasst, wobei auch mehrere der gleichen Einheiten vorhanden sein können. Mittels der Adaptereinheit ist eine einfache Koppelmöglichkeit gegeben, mit der auch Geräte mit der Haupteinheit Daten austauschen können, die selbst keine entsprechende Schnittstelle wie die Haupteinheit besitzen. Dies wird insbesondere dadurch ermöglicht, dass die Adaptereinheit noch weitere drahtlose oder drahtgebundene Anschlussstellen zur Verbindung mit weiteren Geräten aufweist.

Um eine zusätzliche Erweiterungsmöglichkeit zu bieten, kann weiterhin vorgesehen sein, dass zumindest die Haupteinheit zusätzlich mindestens eine drahtgebundene Übertragungsschnittstelle zum Anschluss von mit weiteren drahtgebundenen Übertragungsschnittstellen versehenen weiteren dezentralen Einheiten ausgestattet ist und eine Verwaltungseinheit aufweist, mit der die dezentralen Einheiten und gegebenenfalls vorhandenen weiteren dezentralen Einheiten verwaltet werden. Die drahtgebundene Übertragungsstrecke ist dabei z.B. als Busstrecke ausgebildet, über die mehrere dezentrale Geräte mit der Haupteinheit verbindbar sind.

Eine Kontrollmöglichkeit von einer entfernten Warte aus wird dadurch ermöglicht, dass die Haupteinheit eine Netzwerkschnittstelle für einen drahtgebundenen oder drahtlosen Netzwerkzugang aufweist.

Bei dem Netz kann es sich um ein betriebsinternes oder öffentliches Netz handeln.

Die Kommunikationsmöglichkeit bei Einbau der Haupteinheit und von dezentralen Einheiten in unterschiedlichen Schaltschränken wird dadurch begünstigt, dass die Haupteinheit und/oder zumindest zum Teil die dezentralen Einheiten mit davon entfernten, im Bereich einer Schrankwandung anbringbaren Sende- und Empfangseinheiten verbindbar sind.

Mit den Maßnahmen, dass die Haupteinheit weiterhin mit einer drahtlosen oder drahtgebundenen Verbindungsstelle zum Herstellen einer Datenübertragung mit einer Serverumschalteinrichtung versehen ist, wird der Aufwand bei Anordnung in einem Serverschrank gering gehalten.

Eine vorteilhafte Ausgestaltung besteht dabei darin, dass die Haupteinheit über eine der Serverumschalteinrichtung zugeordnete Sichtanzeige mit einer zugeordneten Sichtanzeigesteuerung der Serverumschalteinrichtung kontrollierbar und/oder konfigurierbar ist, und weiterhin darin, dass die Haupteinheit zum Abfragen und Auswerten von in einem einem Server zugeordneten Serverüberwachungsbaustein erfassten Daten zur Server-Vitalfunktion ausgebildet ist.

Eine vorteilhafte Ausführungsform besteht ferner darin, dass in einem Schaltschrank oder einer Schaltschranküberwachung ein Überwachungssystem nach einem der vorhergehenden Ansprüche aufgenommen ist.

Der im Zusammenhang mit vorliegender Anmeldung gebrauchte Ausdruck Schaltschrank ist allgemein zu verstehen und bezieht sich beispielsweise auch auf Serverschränke oder andere Schränke der Informationstechnik im Innen- und Außenbereich.

Die Erfindung wird nachfolgend anhand von Ausführungsbeispielen unter Bezugnahme auf die Zeichnungen näher erläutert. Es zeigen:
- Fig. 1: ein Schaltschrank-Überwachungssystem in einer schematischen Blockdarstellung und
- Fig. 2: eine Schaltschrankanordnung mit einem Überwachungssystem nach Fig. 1.

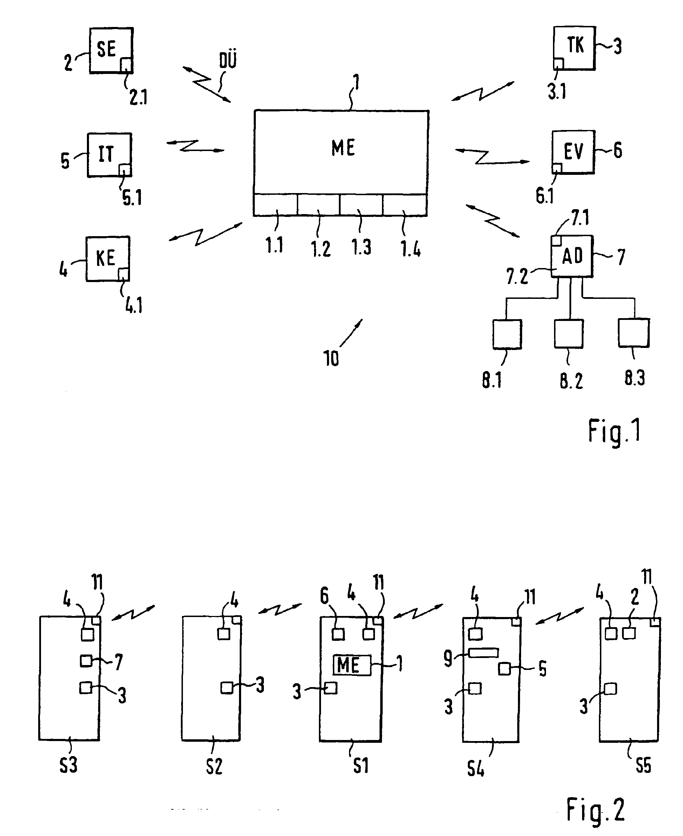

Ein in Fig. 1 gezeigtes Schaltschrank-Überwachungssystem 10 weist als zentrale Überwachungseinheit eine Haupteinheit 1 (Mastergerät) mit mehreren Übertragungsschnittstellen 1.1 bis 1.4 sowie mehrere dezentrale Einheiten einschließlich einer Sensoranschlusseinheit 2, einer Türkontrolleinheit 3, einer Klimasteuerungseinheit 4, einer Bedienungseinheit 5, einer Energieversorgungseinheit 6 und einer Adaptereinheit 7 auf, an die über daran vorgesehene drahtlose oder drahtgebundene Anschlussstellen 7.2 weitere Geräte 8.1, 8.2, 8.3 angeschlossen bzw. anschließbar sind. Die dezentralen Einheiten beziehen sich dabei auf den Schaltschrank selbst betreffende Funktionen und werden mittels der Haupteinheit 1 verwaltet und können von dieser auch angesteuert werden in Abhängigkeit von in der Verwaltungseinheit vorgegebenen oder vorgebbaren Programmen, mit denen auch von den betreffenden und/oder jeweils anderen dezentralen Einheiten mitgeteilte Daten berücksichtigt werden. Zur Datenübertragung weisen die Übertragungsschnittstellen 1.1 bis 1.4 mindestens eine standardisierte Schnittstelle für eine drahtlose Datenübertragung z.B. nach dem Blue-Tooth-Standard auf. Die dezentralen Einheiten 2 bis 7 sind mit entsprechenden weiteren standardisierten drahtlosen Schnittstellen 2.1 bis 7.1 versehen, so dass eine eindeutige, sichere Datenübertragung gewährleistet ist. Die Übertragungsschnittstellen der Haupteinheit 1 umfassen des Weiteren z.B. drahtgebundene Übertragungsschnittstellen 1.2, 1.3 und eine drahtlose oder drahtgebundene Netzwerkschnittstelle 1.4 zur Datenübertragung über ein lokales, betriebseigenes oder öffentliches Netz und eine Kommunikation mit einer entfernten Warte, wobei zu der drahtgebundenen Datenübertragungsstrecke Kupfer- oder Glasfaserleitungen gehören.

Bei diesem Aufbau können alle dezentralen Einheiten 2 bis 7 von der Haupteinheit 1 aus zum Beispiel über die Blue-Tooth-Datenübertragungsstrecke, über Ethernet oder über eine I²C-Strecke überwacht und/oder gesteuert werden. Die Meldungen der einzelnen dezentralen Einheiten 2 bis 7 können gesammelt und über ein einfaches Datenübertragungsprotokoll, wie z.B. SNMP, über E-Mail oder andere Übertragungsarten weitergegeben oder auch an der Bedienungseinheit 5 zum Beispiel an einem entsprechenden Sichtgerät ausgegeben werden. Erforderlichenfalls kann über diese Wege auch von einer Bedienperson Einfluss genommen werden.

An die Sensoranschlusseinheit 2 können entsprechende Sensoren wie in der eingangs genannten Druckschrift WO 97/34345 über an der Sensoranschlusseinheit 2 vogesehene digitale Eingänge, analoge Eingänge, einen Frequenzein-gang oder andere universelle Eingänge angeschlossen werden, wobei in der Sensoranschlusseinheit 2 auch eine automatische Sensorerkennung vorgesehen sein kann. Die Sensoranschlusseinheit 2 kann dann schon eine entsprechende Vorinformation bilden und an die Haupteinheit 1 weitergeben. In der Türkontrolleinheit 3 ist vorteilhaft eine Zutrittskontrolle z.B. über eine Codekarte, einen Transponder oder eine ähnliche Berechtigungskontrolleinheit integriert, wobei die Zutrittskontrolleinheit direkt am Schrank montiert sein kann oder über ein Handgerät erfolgen kann, das dann seinerseits eine standardisierte Schnittstelle zur drahtlosen Kommunikation mit der Haupteinheit 1 aufweist.

Die Klimasteuerungseinheit 4 kann ebenfalls ähnliche Funktionen aufweisen wie in der vorstehend genannten Druckschrift erwähnt. Dadurch können unterschiedliche Klimatisierungskomponenten nach einem vorgegebenen oder vorgebbaren Klimatisierungskonzept geeignet angesteuert werden. Unter anderem können hierbei eine Netzspannungsüberwachung sowie eine Lüftersteuerung und Überwachung, Steuerung und/oder Regelung der weiteren Klimatisierungskomponenten vorgesehen sein, wobei in der Klimasteuerungseinheit 4 anfallende oder gespeicherte Daten einerseits von dieser an die Haupteinheit 1 und andererseits an die Klimatisierungskomponenten übertragen werden können.

Mittels der Bedinungseinheit 5, die auch eine Sichtanzeige z.B. in Form einer TFT-Anzeige aufweist, können Schrankparameter angezeigt und auch Änderungen vorgenommen werden. Auch akustische Meldungen können an der Bedienungseinheit 5 ein- oder ausgegeben werden. Eine günstige Bedienung wird über eine berührungsempfindliche Anzeige (Touch-Screen-Funktion) ermöglicht.

Die Energieversorgungseinheit 6 umfasst eine intelligente Steckdosenleiste, mit der Spannung, Strom und/oder Leistung überwacht und z.B. auch Kosten der daran angeschlossenen Verbraucher erfasst werden können. Mittels einer darin vorgesehenen Echtzeituhr können die einzelnen Anschlussbuchsen automatisch geschaltet werden. Darüber hinaus sind auch die in der vorstehend genannten Druckschrift weiteren Überwachungs- und Steuerungsmöglichkeiten im Zusammenhang mit der Energieversorgung möglich.

Über die Adaptereinheit 7 können weitere Geräte in das Überwachungssystem eingebunden werden, die zum Beispiel nicht mit einer entsprechenden Übertragungsschnittstelle ausgerüstet sind, und zum Beispiel eine RS232-Schnittstelle besitzen. Diese Geräte können über die Adaptereinheit 7 auf einfache Weise in Datenübertragungsverbindung mit der Haupteinheit 1 gebracht werden.

Das bisher beschriebene Schaltschrank-Überwachungssystem 10 kann in nur einem Schaltschrank oder einer Gruppe von aneinander gereihten Schaltschränken untergebracht sein, wobei die Haupteinheit 1 und die dezentralen Einheiten 2 bis 7 an geeigneten Stellen angeordnet werden können.

Wie Fig. 2 zeigt, besteht aber auch die Möglichkeit, die Haupteinheit und die dezentralen Einheiten 2 bis 7 in getrennten Schaltschränken S1 bis S5 anzuordnen, wobei für die gesamte Schaltschrankanordnung eine Haupteinheit 1 ausreicht und dezentrale Einheiten 2 bis 7 in unterschiedlicher Anzahl und Anordnung je nach Überwachungsaufgabe und Überwachungsfunktion in den verschiedenen Schaltschränken S1 bis S5 angeordnet sein können. Um auch eine sichere drahtlose Datenübertragung zwischen den verschiedenen Einheiten 1 bis 7 des Überwachungssystems 10 zwischen den Schaltschränken S1 bis S5 zu gewährleisten, ist vorteilhaft vorgesehen, dass an geeigneten Stellen der Schaltschränke S1 bis S5 Sende-Empfangseinheiten 11 angeordnet sind, die ein Senden und Empfangen der drahtlos übertragenen Daten zwischen den getrennten Schaltschränken ermöglichen. Die verschiedenen Einheiten 1 bis 7 können mit entsprechenden Anschlüssen einfach mit den Sende-Empfangseinheiten 11 gekoppelt werden. Wird z.B. eine drahtlose Übertragung mittels des Blue-Tooth-Standards verwirklicht, so können die Schaltschränke in einer entsprechenden Entfernung von bis zu 100 Metern von einander angeordnet sein.

Das Überwachungssystem 10 ist weiterhin derart ausgebildet, dass es z.B. an eine Serverumschalteinrichtung 9 drahtlos oder drahtgebunden ankoppelbar ist, um eine der Serverumschalteinrichtung 9 zugeordnete Sichtanzeige und Sichtanzeigensteuerung zur Darstellung von Informationen und für eine Konfiguration der Haupteinheit 1 auszunutzen. Auch kann die Haupteinheit 1 über die Serverumschalteinrichtung 9 oder auch direkt an einem Überwachungsbaustein eines Servers oder einer anderen Recheneinheit angeschlossen sein, um dessen bzw. deren Vitalfunktionen zu überwachen.

Mit den beschriebenen Maßnahmen ergibt sich ein mit relativ geringem Aufwand variabel aufbaubares Schaltschrank-Überwachungssystem 10.

## Patentansprüche

1. Schaltschrank-Überwachungssystem (1,0), das zum Überwachen von den Schaltschrank selbst betreffenden Funktionen einschließlich Temperaturregulierung ausgebildet ist und eine zentrale Überwachungseinheit (ME) sowie mehrere damit in Datenübertragungsverbindung über Datenübertragungsstrecken (DÜ) stehende oder bringbare dezentrale Einheiten (2 bis 7) aufweist, wobei jede dezentrale Einheit (2 bis 7) einer jeweiligen Funktion oder Funktionsgruppe gleichartiger Funktionen zugeordnet ist,
**dadurch gekennzeichnet,**
**daß** die zentrale Überwachungseinheit (ME) als Haupteinheit mit zumindest einer standardisierten Schnittstelle (1.1) für drahtlose Datenübertragung versehen ist und
**daß** jede dezentrale Einheit (2 bis 7) eine jeweils gleich ausgebildete, an die Schnittstelle (1.1) für drahtlose Datenübertragung der Überwachungseinheit (ME) angepaßte, standardisierte Schnittstelle (2.1, 3.1, 4.1, 5.1, 6.1, 7.1) für drahtlose Datenübertragung aufweist und
**daß** die Datenübertragung zwischen den dezentralen Einheiten (2 bis 7) und der zentralen Überwachungseinheit (ME) über die Schnittstelle (1.1) für drahtlose Datenübertragung der Überwachungseinheit (ME) und der jeweiligen Schnittstelle der dezentralen Einheit (2 bis 7) drahtlos erfolgt.

2. Überwachungssystem nach Anspruch 1,
**dadurch gekennzeichnet,**
**dass** die drahtlose Übertragungstrecke als eine Funkstrecke, eine Infrarotstrecke oder eine Ultraschallstrecke ausgebildet ist.

3. Überwachungssystem nach einem der Ansprüche 1 und 2,
**dadurch gekennzeichnet,**
**dass** die dezentralen Einheiten eine Sensoranschlusseinheit (2), eine Türkontrolleinheit (TK), eine Klimatisierungseinheit (4), eine Bedienungseinheit (lT), eine Energieversorgungseinheit (6) oder eine Adaptereinheit (7) oder eine Kombination aus zumindest zweien dieser Einheiten umfasst.

4. Überwachungssystem nach Anspruch 3,
**dadurch gekennzeichnet,**
**dass** die Adaptereinheit (7) noch weitere drahtlose oder drahtgebundene Anschlussstellen (7.2) zur Verbindung mit weiteren Geräten (8.1, 82, 8.3) aufweist.

5. Überwachungssystem nach einem der vorhergehenden Ansprüche,
**dadurch gekennzeichnet,**
**dass** zumindest die Haupteinheit (ME) zusätzlich mindestens eine drahtgebundene Übertragungsschnittstelle (1.2, 1.3) zum Anschluss von mit weiteren drahtgebundenen Übertragungsschnittstellen versehenen weiteren dezentralen Einheiten ausgestattet ist und eine Verwaltungseinheit (VE) aufweist, mit der die dezentralen Einheiten (2 bis 7) und gegebenenfalls vorhandenen weiteren dezentralen Einheiten verwaltet werden.

6. Überwachungssystem nach einem der vorhergehenden Ansprüche,
**dadurch gekennzeichnet,**
**dass** die Haupteinheit (ME) eine Netzwerkschnittstelle (1.4) für einen drahtgebundenen oder drahtlosen Netzwerkzugang aufweist.

7. Überwachungssystem nach einem der vorhergehenden Ansprüche,
**dadurch gekennzeichnet,**
**dass** die Haupteinheit (1) und/oder zumindest zum Teil die dezentralen Einheiten (2 bis 7) mit davon entfernten Sende- und Empfangseinheiten (11) verbindbar sind.

8. Überwachungssystem nach einem der vorhergehenden Ansprüche,
**dadurch gekennzeichnet,**
**dass** die Haupteinheit (1) weiterhin mit einer drahtlosen oder draht-gebundenen Verbindungsstelle zum Herstellen einer Datenübertragung mit einer Serverumschalteinrichtung versehen ist.

9. Überwachungssystem nach Anspruch 8,
**dadurch gekennzeichnet,**
**dass** die Haupteinheit (1) über eine der Serverumschalteinrichtung (9) zugeordnete Sichtanzeige mit einer zugeordneten Sichtanzeigesteuerung der Serverumschalteinrichtung (9) kontrollierbar und/oder konfigurierbar ist.

10. Überwachungssystem nach Anspruch 8 oder 9,
**dadurch gekennzeichnet,**
**dass** die Haupteinheit zum Abfragen und Auswerten von in einem einem Server zugeordneten Serverüberwachungsbaustein erfassten Daten zur Server-Vitalfunktion ausgebildet ist.

11. Schaltschrank oder Schaltschrankanordnung,
**dadurch gekennzeichnet,**
**dass** darin ein Überwachungssystem (1) nach einem der vorhergehenden Ansprüche aufgenommen ist.

## Claims

1. Switchgear cabinet monitoring system (10), which is configured for monitoring functions that pertain to the switchgear cabinet itself, including temperature control, and includes a central monitoring unit (ME) as well as several decentralised units (2 to 7) that are connected thereto or can be connected thereto via transmission circuits (DÜ) for data communication purposes, wherein each decentralised unit (2 to 7) is associated with a respective function or function group of similar type functions, **characterised in that** the central monitoring unit (ME) as the main unit is provided with at least one standardised interface (1.1) for wireless data transmission and **in that** each decentralised unit (2 to 7) includes a standardised interface (2.1, 3.1, 4.1, 5.1, 6.1, 7.1) for wireless data transmission, each configured in an identical manner and adapted to the interface (1.1) for wireless data transmission of the monitoring unit (ME) and **in that** the data transmission between the decentralised units (2 to 7) and the central monitoring unit (ME) is effected in a wireless manner via the interface (1.1) for wireless data transmission of the monitoring unit (ME) and the respective interface of the decentralised unit (2 to 7).

2. Monitoring system according to claim 1, **characterised in that** the wireless transmission circuit is in the form of a radio link, an infrared link or an ultrasound link.

3. Monitoring system according to one of claims 1 and 2, **characterised in that** the decentralised units include a sensor connection unit (2), a door control unit (TK), an air conditioning unit (4), a control unit (IT), a power supply unit (6) or an adapter unit (7) or a combination of at least two of the said units.

4. Monitoring system according to claim 3, **characterised in that** the adapter unit (7) includes even more wireless or line connection points (7.2) for connecting to additional devices (8.1, 8.2, 8.3).

5. Monitoring system according to one of the preceding claims, **characterised in that** at least the main unit (ME) is provided additionally with at least one line transmission interface (1.2, 1.3) for the connection of additional decentralised units provided with additional line transmission interfaces and includes a management unit (VE), with which the decentralised units (2 to 7) and, where applicable, any additional decentralised units that are present are managed.

6. Monitoring system according to one of the preceding claims, **characterised in that** the main unit (ME) includes a network interface (1.4) for a line or wireless network access.

7. Monitoring system according to one of the preceding claims, **characterised in that** the main unit (1) and/or at least partially the decentralised units (2 to 7) are connectable to sending and receiving units (11) that are remote therefrom.

8. Monitoring system according to one of the preceding claims, **characterised in that** the main unit (1) is additionally provided with a wireless or line connecting point for producing a data transmission with a server switch-over device.

9. Monitoring system according to claim 8, **characterised in that** the main unit (1) is controllable and/or configurable via a visual display associated with the server switch-over device by an associated visual display control of the server switching device (9).

10. Monitoring system according to claim 8 or 9, **characterised in that** the main unit is configured for interrogating and evaluating data for the vital server function detected in a server monitoring module associated with a server.

11. Switchgear cabinet or switchgear cabinet arrangement, **characterised in that** a monitoring system (1) is accommodated in the said switchgear cabinet in accordance with one of the preceding claims.

## Revendications

1. Système (10) de contrôle d'une armoire de commande qui est constituée pour contrôler des fonctions concernant l'armoire de commande elle-même, y compris une régulation de température, et qui a une unité (ME) centrale de contrôle ainsi que plusieurs unités (2 à 7) décentralisées en liaison de transmission de données par des sections (DÜ) de transmission de données ou pouvant être mises en cette liaison, chaque unité (2 à 7) décentralisée étant associée à une fonction respective ou à un groupe de fonctions de même type,
**caractérisé**
**en ce que** l'unité (ME) centrale de contrôle est munie en tant qu'unité principale d'au moins une interface (1.1) normalisée pour une transmission de données sans fil et
**en ce que** chaque unité (2 à 7) décentralisée a pour une transmission de données sans fil une interface (2.1, 3.1, 4.1, 5.1, 6.1, 7.1) normalisée adaptée à l'interface (1.1) pour la transmission de données sans fil de l'unité (ME) de contrôle, et
**en ce que** la transmission de données s'effectue sans fil entre les unités (2 à 7) décentralisées et l'unité (ME) centrale de contrôle par l'interface (1.1) pour la transmission de données sans fil entre l'unité (ME) de contrôle et l'interface respective de l'unité (2 à 7) décentralisée.

2. Système de contrôle suivant la revendication 1,
**caractérisé**
**en ce que** la section de transmission sans fil est constituée sous la forme d'une section radio, d'une section infrarouge ou d'une section à ultrasons.

3. Système de contrôle suivant l'une des revendications 1 et 2,
**caractérisé en ce que** les unités décentralisées comprennent une unité (2) de connexion d'un capteur, une unité (TK) de commande de porte, une unité (4) de conditionnement d'air, une unité (IT) de service, une unité (6) d'alimentation en énergie ou une unité (7) d'adaptateur ou une combinaison d'au moins deux de ces unités.

4. Système de contrôle suivant la revendication 3,
**caractérisé**
**en ce que** l'unité (7) d'adaptateur a encore d'autres points (7.2) de connexion sans fil ou avec fil pour la liaison avec d'autres appareils (8.1, 8.2, 8.3).

5. Système de contrôle suivant l'une des revendications précédentes,
**caractérisé**
**en ce qu'**au moins l'unité (ME) principale est équipée en plus d'au moins une interface (1.2, 1.3) de transmission par fil, pour le raccordement d'autres unités décentralisées munies d'autres interfaces de transmission par fil, et a une unité (VE) de gestion par laquelle les unités (2 à 7) décentralisées et, le cas échéant, d'autres unités décentralisées présentes sont gérées.

6. Système de contrôle suivant l'une des revendications précédentes,
**caractérisé**
**en ce** l'unité (ME) principale a une interface (1.4) à réseau pour un accès à réseau par fil ou sans fil.

7. Système de contrôle suivant l'une des revendications précédentes,
**caractérisé**
**en ce que** l'unité (1) principale et/ou au moins en partie les unités (2 à 7) décentralisées peuvent être reliées à des unités (11) d'émission et de réception, qui en sont éloignées.

8. Système de contrôle suivant l'une des revendications précédentes,
**caractérisé**
**en ce que** l'unité (1) principale est munie en outre d'un point de liaison sans fil ou par fil pour ménager une transmission de données avec un dispositif de commutation à serveur.

9. Système de contrôle suivant la revendication 8,
**caractérisé**
**en ce que** l'unité (1) principale peut être commandée et/ou configurée par un affichage visuel associé au dispositif (9) de commutation à serveur, à une commande d'affichage visuel associé du dispositif (9) de commutation à serveur.

10. Système de contrôle suivant la revendication 8 ou 9,
**caractérisé**
**en ce que** l'unité principale est constituée pour interroger et exploiter, en vue d'une fonction vitale du serveur des données détectées dans un module de contrôle de serveur associé à un serveur.

11. Armoire de commande ou dispositif à armoire de commande,
**caractérisée**
**en ce qu'**il y est logé un système (1) de contrôle suivant l'une des revendications précédentes.
